# EUROPEAN PATENT APPLICATION

(11) **EP 3 534 321 A1**
(43) Date of publication of application: **04.09.2019**
(21) Application number: 19159980.2
(22) Date of filing: 28.02.2019
(51) Int. Cl.: G06Q 50/02, G06Q 10/08

(54) **AGRICULTURAL CROP PACKAGE RETRIEVAL AND TRACKING SYSTEM AND METHOD**

(30) Priority: 28.02.2018 US 201862636703 P; 26.04.2018 US 201815963617
(71) Applicant: Deere & Company, Moline, IL 61265 (US)
(72) Inventor: Lang, Eric R, 68163 Mannheim (DE); Derscheid, Daniel E, 68163 Mannheim (DE); Shook, Gerald, 68163 Mannheim (DE)
(74) Representative: Stein, Stefan

(57) **Abstract**

A crop management system is configured to monitor agricultural crop packages (30) produced by a baler (20). The crop management system includes a sensor (40) operable to generate a first signal in response to a crop package (30) being discharged from the baler (20). The first signal represents a first location of the crop package (30) on an agricultural field (25). The crop management system also includes a processor-based subsystem (80) configured to display a virtual map (95) of the agricultural field (25), receive the first signal, determine the first location of the crop package (30) relative to the virtual map (95) based on the first signal, receive a second signal representing a location of a vehicle collecting the crop package (30) at the first location, receive a third signal representing a second location of the crop package (30), and determine the second location of the crop package (30) relative to the virtual map (95) based on the third signal.

## Description

### FIELD OF THE DISCLOSURE

The present disclosure relates to retrieval and tracking agricultural crop packages from an agricultural field, and more particularly to retrieving and tracking agricultural crop packages using a software application on an electronic mobile device.

### SUMMARY

In one aspect, a crop management system is configured to monitor agricultural crop packages produced by a baler. The crop management system includes a sensor operable to generate a first signal in response to a crop package being discharged from the baler. The first signal represents a first location of the crop package on an agricultural field. The crop management system also includes a processor-based subsystem configured to display a virtual map of the agricultural field, receive the first signal, determine the first location of the crop package relative to the virtual map based on the first signal, receive a second signal representing a location of a vehicle collecting the crop package at the first location, receive a third signal representing a second location of the crop package, and determine the second location of the crop package relative to the virtual map based on the third signal. In an embodiment, the sensor is a first sensor, and wherein the baler is configured to discharge a plurality of crop packages on the agricultural field, the crop management system further comprising a second sensor operable to generate a fourth signal representing at least one physical characteristic of each of the plurality of crop packages formed within the baler, and wherein the processor-based subsystem is configured to determine a group of the plurality of crop packages within a determined range based on the at least one physical characteristic of the plurality of crop packages. In another embodiment, the processor-based subsystem is configured to display the group of the plurality of crop packages on the virtual map.

In another aspect, a crop management system is configured to monitor agricultural crop packages produced by a baler. The crop management system includes a sensor operable to generate a first signal in response to a crop package being discharged from the baler. The first signal represents a first location of the crop package on an agricultural field. The crop management system includes a processor-based subsystem configured to receive the first signal in response to the crop package being discharged from the baler. The first signal is communicated to the processor-based subsystem by a mobile electronic device. The processor-based subsystem is also configured to determine the first location of the crop package based on the first signal and receive a second signal representing a second location of the crop package. The second signal is communicated to the processor-based subsystem by the mobile electronic device. The processor-based subsystem is further configured to determine the second location of the crop package based on the second signal. In an embodiment, the processor-based subsystem is configured to display the group of the plurality of crop packages on the virtual map.

In yet another aspect, a method of managing agricultural crop packages includes forming a crop package within an agricultural baler and discharging the crop package from the agricultural baler onto an agricultural field at a first location. The agricultural baler includes a sensor configured to produce a first signal representing the first location. The sensor is in communication with a processor-based subsystem configured to identify the first location of the crop package on a virtual map of the agricultural field based on the first signal. The method also includes inputting a second signal into the processor-based subsystem. The second signal represents a vehicle collecting the crop package at the first location. The method further includes transporting the crop package to a second location different from the first location and inputting a third signal into the processor-based subsystem. The third signal represents the second location of the crop package. The processor-based subsystem is configured to identify the second location of the crop package on the virtual map of the agricultural field based on the third signal. In an embodiment, the method further comprising displaying the virtual map on an electronic mobile device. In a further embodiment, the method further comprising uploading at least the first signal and the third signal to a wireless network so that the first signal and the third signal are sharable with at least one other mobile electronic device.

Other aspects of the disclosure will become apparent by consideration of the detailed description and accompanying drawings.

### BRIEF DESCRIPTION OF THE DRAWINGS

FIG. 1 is a perspective view of a crop package formation unit including a vehicle coupled to an agricultural baler.
FIG. 2 is a top view of an agricultural field including the crop package formation unit of FIG. 1 producing a plurality of crop packages and a crop package retriever configured to collect and transport the plurality of crop packages relative to the agricultural field.
FIG. 3 is a schematic view of a crop package retrieval and tracking system including a wireless network in communication with electronic mobile devices used within the crop package formation unit and the crop package retriever of FIG. 2.
FIG. 4 illustrates a display layout of one of the electronic mobile devices of FIG. 3 including a virtual map of the agricultural field of FIG. 2 identifying the locations of the plurality of crop packages, the crop package retriever, and the crop package formation unit.
FIG. 5 illustrates the display of FIG. 4 identifying physical properties of one of the plurality of crop packages on the agricultural field.
FIG. 6 illustrates the display of FIG. 4 identifying a filtering feature that can be applied to the plurality of crop packages.
FIG. 7 illustrates the display of FIG. 4 identifying the plurality of crop packages within the applied filter of FIG. 6.
FIG. 8 is a flow diagram of a method of retrieving and tracking the plurality of crop packages using at least one of the mobile devices of FIG. 3.
FIG. 9 illustrates the display of FIG. 4 identifying one of the plurality of crop packages transported by the crop package retriever to a new location relative to the agricultural field.
FIG. 10 illustrates the display of FIG. 4 identifying a group of the plurality of crop packages transported to a similar location.

### DETAILED DESCRIPTION

Before any embodiments of the disclosure are explained in detail, it is to be understood that the disclosure is not limited in its application to the details of construction and the arrangement of components set forth in the following description or illustrated in the following drawings. The disclosure is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings. Terms of degree, such as "substantially" or "approximately" are understood by those of ordinary skill to refer to reasonable ranges outside of the given value, for example, general tolerances associated with manufacturing, assembly, and use of the described embodiments.

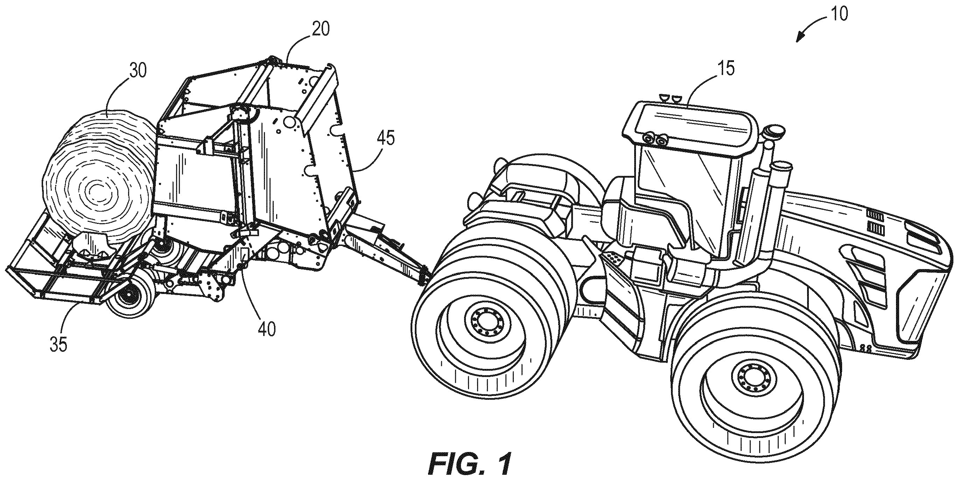

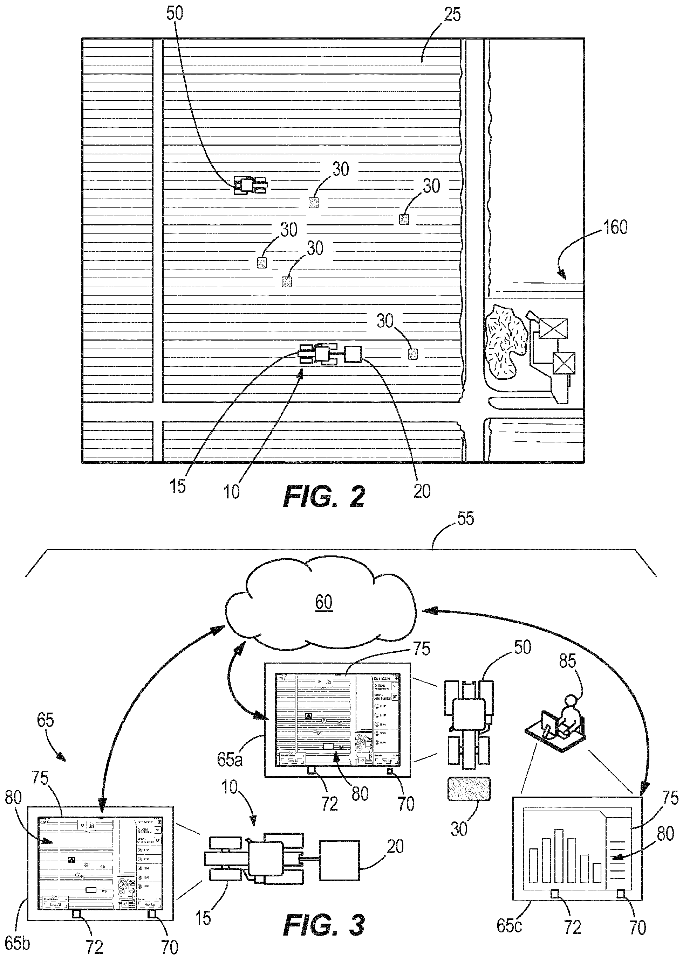

FIG. 1 illustrates an agricultural crop package formation unit 10 including a vehicle 15 (e.g., a tractor) and a baler 20 (e.g., a crop packaging system). The tractor 15 supplies operational power in the form of hydraulic, electrical, and/or mechanical power to the baler 20 so that as the crop package formation unit 10 moves through an agricultural field 25 (FIG. 2), the baler 20 is operable to form a crop package 30 (e.g., a cylindrical bale) and then discharge the crop package 30 onto the agricultural field 25. In the illustrated embodiment, the baler 20 forms the crop package 30 from the agricultural field 25 to be discharged onto an accumulator 35, which can support a plurality of crop packages at a time, with the accumulator 35 operable to discharge the crop package(s) onto the agricultural field 25. In other embodiments, the accumulator 35 can be omitted so that the crop package 30 formed within the baler 20 is discharged (e.g., dropped) directly onto the agricultural field 25. In some embodiments, the baler 20 can produce a crop package 30 from hay, corn stalks, and the like. In other embodiments, the baler 20 can produce a cuboid crop package 30 (e.g., a square bale).

With reference to FIG. 2, the crop package formation unit 10 moves through the agricultural field 25 to form each crop package 30 and discharge each crop package 30 at a drop location (e.g., an original position) on the agricultural field 25. The illustrated baler 20 includes a discharge sensor 40 (FIG. 1) that is operable to generate a signal once each crop package 30 is discharged from the baler 20 and dropped onto the agricultural field 25. These signals provided by the discharge sensor 40 are used to locate each crop package 30 on the agricultural field 25, as discussed in more detail below. The baler 20 also includes a crop package sensor 45 (FIG. 1) that is operable to determine at least one characteristic of the crop package 30 being formed in the baler 20. For example, the crop package sensor 45 can determine a physical characteristic of the crop package 30 including an average moisture content of the crop package 30, a minimum moisture content of the crop package 30, a maximum moisture content of the crop package 30, a dry weight (excluding the weight of the moisture) of the crop package 30, a wet weight (including the weight of the moisture) of the crop package 30, a dimension of the crop package 30 (e.g., a diameter of the crop package 30), tie quality of the crop package, etc. In some embodiments, the baler 20 can include more than one crop package sensor 45 each determining at least one characteristic of the crop packages 30.

Once the crop packages 30 are discharged from the baler 20 and dropped onto the agricultural field 25, a crop package retriever 50 (FIG. 2) can collect at least one crop package 30 and move the collected crop package(s) 30 to a different location. As such, the retriever 50 can be any vehicle (e.g., a tractor, a skid-steer loader, etc.) that is operable to collect (i.e., pick up) and transport at least one crop package 30. In some embodiments, the retriever 50 can transport at least one crop package 30 to a different location on the agricultural field 25 (e.g., an edge of the agricultural field 25), transport at least one crop package 30 to a location off of the agricultural field 25 (e.g., into a building), transport at least one crop package 30 to a mobile crop package trailer, etc. In other embodiments, a plurality of retrievers 50 can be used to collect and/or transport the crop packages 30 from the agricultural field 25, and likewise, a plurality of agricultural crop package formation units 10 can be used to form and discharge the crop packages 30 onto the agricultural field 25.

With reference to FIG. 3, a crop package retrieval and tracking system 55 (e.g., a crop management system) is operable to locate the crop packages 30 on the agricultural field 25 and track the crop packages 30 as the crop packages 30 are moved to different locations. The crop package retrieval and tracking system 55 includes a wireless network 60 (e.g., a cloud network, cellular telecommunication network, etc.) that is in communication with a plurality of electronic devices 65 each having a control processor 70. In the illustrated embodiment, the electronic devices 65 are electronic mobile devices (e.g., a smartphone, a tablet, etc.) including a display 75 and a global positioning system (GPS) sensor 72. Each electronic device 65 is operable with a software application 80 (e.g., a processor-based subsystem) by each control processor 70. The software application 80 is viewable on each display 75.

An operator of the retriever 50 can carry at least one of the electronic devices 65a with him as he collects and transports the crop packages 30 from the agricultural field 25. As such, the retriever operator can use the software application 80 while operating the retriever 50. In other embodiments, the retriever 50 can be in communication with the wireless network 60 (e.g., via a Wi-Fi connection, Bluetooth connection, etc.) for the electronic device 65a to be in communication with the wireless network 60 through the retriever 50. In further embodiments, the electronic device 65a can be a portion of the retriever 50 (e.g., a display mounted within an operator's cab of the retriever 50).

Likewise, an operator of the vehicle 15 can carry at least one of the electronic devices 65b with him as the vehicle operator operates the agricultural crop package formation unit 10 through the agricultural field 25. As such, the vehicle operator can use the software application 80 while operating the agricultural crop package formation unit 10. In other embodiments, the vehicle 15 can be in communication with the wireless network 60 (e.g., via a Wi-Fi connection, Bluetooth connection, etc.) for the electronic device 65b to be in communication with the wireless network 60 through the vehicle 15. In further embodiments, the electronic device 65b can be a portion of the vehicle 15 (e.g., a display mounted within an operator's cab of the vehicle 15).

As the electronic devices 65 are connectable to the wireless network 60, the electronic devices 65 can communicate with each other through the wireless network 60. As a result, any update or modification made on the software application 80 through one electronic device 65 is automatically updated to the other electronic devices 65. However, the software application 80 can be operated and accessed independently by different operators (e.g., the retriever operator(s), the vehicle operator(s), etc.). In some embodiments, the electronic devices 65 are in communication with each other via a different connection (e.g., a Wi-Fi connection, a Bluetooth connection, a cellular connection, etc.). As such, if the wireless network 60 is temporarily lost or omitted, then the electronic devices 65 can still be in communication with each other. For example, when the retriever 50, the crop package formation unit 10, and/or another retriever 50, etc., are within a determined range of each other, connection between electronic devices 65 can be regained without the wireless network 60. As a result, the electronic devices 65 can update and sync the software application 80. In other embodiments, one electronic device 65 can communicate with another electronic device 65 to sync the software application 80 by physically transporting data between the two electronic devices 65 (e.g., via a portable Universal Serial Bus (USB) memory card, via a secure digital (SD) memory card, etc.).

With continued reference to FIG. 3, the crop package retrieval and tracking system 55 can further include a manager or another operator 85 with access to the software application 80 through another electronic device 65c (e.g., a smartphone, a tablet, a desktop computer, etc.) remote from the agricultural field 25. For example, the manager 85 can be located within a building away from the agricultural field 25. As such, the manager 85 can monitor the progress of the agricultural crop package formation unit(s) 10, monitor the progress of the retriever(s) 50, monitor a condition of the crop packages 30 being formed by the baler(s) 20, etc. In other embodiments, the manager 85 can be omitted from the crop package retrieval and tracking system 55.

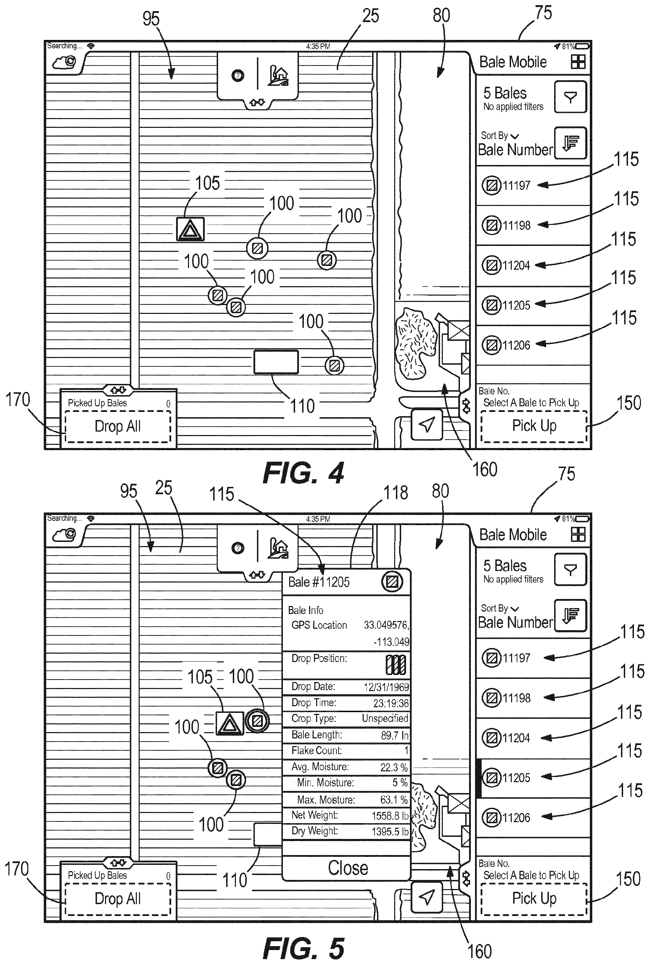

With reference to FIG. 4, the software application 80 can generate a virtual map 95 of the agricultural field 25 to be shown on the displays 75 of the electronic devices 65. The software application 80 can also generate virtual crop package icons 100, each representative of a location of each crop package 30, a virtual retriever icon 105 representative of a location of the retriever 50, and a virtual crop package formation unit icon 110 representative of a location of the crop package formation unit 10 on the virtual map 95. In some embodiments, the virtual retriever icon 105 and/or the virtual crop package formation unit icon 110 can be omitted. In further embodiments when more than one retriever 50 and/or more than one crop package formation unit 10 is used, the software application 80 can locate a plurality of retrievers 50 and/or a plurality of crop package formation units 10 on the virtual map 95.

Generation of one of the virtual crop package icons 100 is described in detail below but can be applicable to other virtual crop package icons 100 on the virtual map 95. As the crop package formation unit 10 discharges a crop package 30 onto the agricultural field 25, the discharge sensor 40 of the baler 20 generates a signal that is received by the mobile electronic device 65a, and in turn, the mobile electronic device 65a sends a signal via the GPS sensor 72 to the software application 80 that represents a location of the mobile electronic device 65a. Accordingly, the software application 80 automatically generates the virtual crop package icon 100 at the same coordinates as the crop package 30 on the agricultural field 25. In one embodiment, the software application 80 determines the location of the crop package 30 based on the signal generated by the discharge sensor 40 and the signal generated by the GPS sensor 72 as the operator of the crop package formation unit 10, which is carrying the mobile electronic device 65a, is positioned within the vehicle 15 and the baler 20 is positioned behind the vehicle 15, the software application 80 determines the distance that separates the mobile electronic device 65a and a discharge location of the crop packages 30 from the baler 20 (e.g., 10 feet, 20 feet, 30 feet, etc.) to accurately position each virtual crop package icon 100 on the virtual map 95. In addition, the software application 80 also automatically generates a serial number 115 for the virtual crop package icon 100 that corresponds to the crop package 30 on the agricultural field 25. In the illustrated embodiment, the serial number 115 of each virtual crop package icon 100 can be listed in column-form on a side of the display 75 (FIG. 4). In other embodiments, the serial number 115 can be any number, color, symbol, etc. that uniquely identifies each virtual crop package icon 100. The software application 80 further associates the serial number 115 of each virtual crop package icon 100 to the at least one characteristic of the corresponding crop package 30, which is determined by the crop package sensor 45 of the baler 20 as discussed above. As a result, an operator of the software application 80 (e.g., the manager 85, the retriever operator, the vehicle operator, etc.) can select one virtual crop package icon 100 or one serial number 115 on the display 75 and the software application 80 can display an information sub-display 118 specific to the selected crop package 30. With reference to FIG. 5, the specific information of a selected virtual crop package icon 100 can include a GPS location of the crop package 30, date/time when the crop package 30 was formed and dropped onto the agricultural field 25, the type (e.g., corn stalks, hay, etc.) of crop package 30, at least one dimension of the crop package 30, a moisture content of the crop package 30, a weight of the crop package 30, etc.

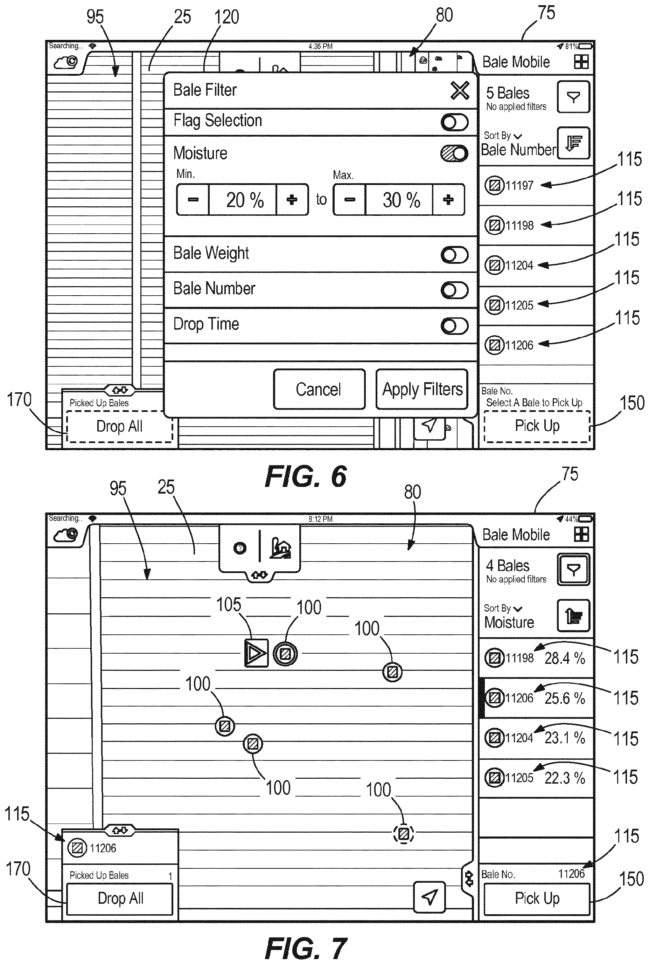

With desirable information displayed on the electronic device 65a, the retriever operator can selectively collect the crop package(s) 30 on the agricultural field 25 dependent upon specific characteristics of the crop package(s) 30. With reference to FIG. 6, the software application 80 includes a crop package filtering feature 120 that is operable to filter the virtual crop package icons 100-and ultimately the crop packages 30-dependent on a desired characteristic within a desired value range. For example, the crop package filtering feature 120 can filter the virtual crop package icons 100 on the display 75 based on moisture content between a certain range (e.g., any crop packages 30 at a moisture content greater than 20% and less than 30%). The illustrated crop package filtering feature 120 can categorize the crop packages 30 by any characteristic and by any desired range (e.g., the crop package filtering feature 120 can identify the crop packages 30 within a desired weight, within a desired size, that were formed within or before/after a certain day/time, etc.). Once the filter is applied on the crop package filtering feature 120, the software application 80 determines a group of the virtual crop package icons 100 that correspond to the crop packages 30 within the applied filter (e.g., four of five virtual crop package icons 100 are within the applied filter range; FIG. 7). Accordingly, the retriever operator can collect and transport the crop packages 30 that include similar characteristics together by the crop package filtering feature 120. In other embodiments, the retriever operator can also simply select one virtual crop package icon 100 or one serial number 115 on the display 75 to open the information specific to the corresponding crop package 30 (FIG. 5) without using the crop package filtering feature 120.

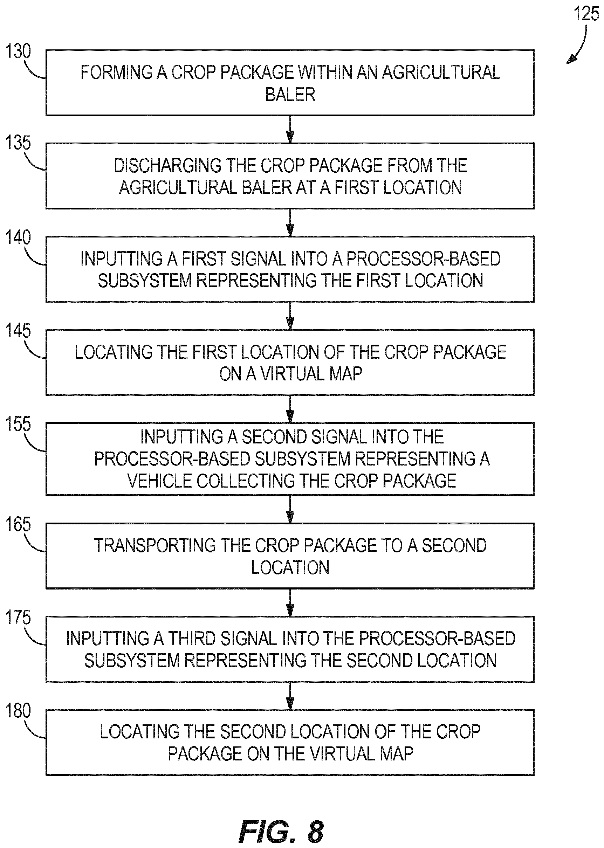

A method 125 of collecting and tracking the crop packages 30 relative to the agricultural field 25 is illustrated in FIG. 8. As discussed above, the baler 20 forms a crop package 30 as the crop package formation unit 10 moves along the agricultural field 25 (step 130) to then discharge the crop package 30 onto the agricultural field 25 at a first or drop location (step 135). For example, the first locations of the crop packages 30 are illustrated in FIG. 2. The discharge sensor 40 of the baler 20 (FIG. 1) communicates with the software application 80 through the mobile electronic device 65a to automatically input a first signal into the software application 80 representing the first location of the crop package 30 on the agricultural field 25 (step 140). Stated another way, at least one control processor 70 of at least one electronic device 65 receives the first signal from the discharge sensor 40 for the control processor 70 to use its own location via the GPS sensor 72 to automatically input a location of the crop package 30 into the software application 80. The software application 80 then generates the virtual crop package icon 100 of the crop package 30 and locates the virtual crop package icon 100 on the virtual map 95 based at least on the first signal of the discharge sensor 40 (step 145). Specifically, the software application 80 determines the location of the crop package 30 based on the signal of the discharge sensor 40 and the signal from the GPS sensor 72 as the crop packages 30 are discharged from the baler 20 at a different location from the electronic mobile device 65a. Steps 140 and 145 repeat for each crop package 30 discharged onto the agricultural field 25. In other embodiments, the crop package formation operator can input the drop locations of the crop packages 30 into the software application 80 by manually selecting an interface on the display 75 of the electronic mobile device 65a.

To collect at least one crop package 30 from the agricultural field 25, the retriever operator moves the retriever 50 to the desired crop package 30 and collects the crop package 30 off of the agricultural field 25. In the illustrated embodiment, the retriever operator manually updates the software application 80 to signify that the desired crop package 30 has been collected. In particular, the retriever operator manually selects a desired virtual crop package icon 100 on the display 75 and then manually selects a first input interface 150 (e.g., a pick up interface; FIG. 7) on the display 75 to input a second signal into the software application 80 representing the retriever 50 collecting the crop package 30 off of the agricultural field 25 at the first location (step 155). Once the desired virtual crop package icon 100 and the first input interface 150 is selected, the serial number 115 of the crop package 30 picked up by the retriever 50 is displayed adjacent the first input interface 150 (FIG. 7). In addition, the serial number 115 of the crop package 30 picked up by the retriever 50 is also displayed adjacent a second input interface 170 located on an opposing side of the display 75 than the first input interface 150. In other embodiments, once the retriever 50 moves close enough to the desired crop package 30 and/or picks up the crop package 30, the software application 80 can automatically determine that the desired crop package 30 has been picked up and update the status of the crop package 30 accordingly. The determination that the crop package 30 has been collected or retrieved can be made based upon a GPS or other location sensor and one or more operation sensors which signal that the crop package 30 has been picked up. The one or more operation sensors can sense or detect one or more operations of the retriever 50 included in collecting or retrieving the bale. Each of the location and operation sensors can be located on the retriever 50, the electronic mobile device 65a, or both. In this embodiment, the first input interface 150 can be omitted.

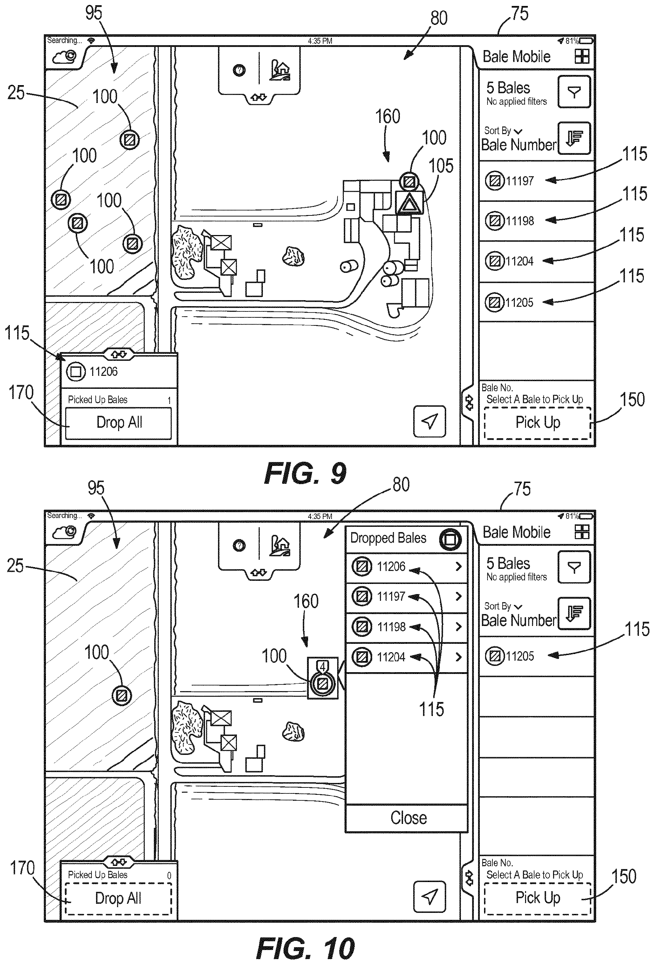

Once the crop package 30 is collected, the retriever 50 can move the collected crop package 30 from the agricultural field 25 to a second or new location 160 illustrated in FIG. 9 (step 165). In the illustrated embodiment, the new location 160 is across a road from the agricultural field 25. In other embodiments, the new location 160 can be anywhere besides the original drop location of the crop package 30 on the agricultural field 25. In the illustrated embodiment, the retriever operator also manually updates the software application 80 to signify that the collected crop package 30 has been dropped at the new location 160. In particular, the retriever operator manually selects the second input interface 170 (e.g., a drop interface; FIG. 9) on the display 75 to input a third signal into the software application 80 representing the retriever 50 dropping the collected crop package 30 at the new location 160 (step 175). The software application 80 then locates the virtual crop package icon 100 of the dropped crop package 30 at the new location 160 on the virtual map 95 based on the third signal (step 180). In one embodiment, as the retriever operator, who is carrying the mobile electronic device 65b, is positioned within a cab of the retriever 50 and crop package 30 is dropped a distance from the cab (e.g., 5 feet, 10 feet, etc.), the software application 80 can determine the distance that separates the mobile electronic device 65b and a drop location of the crop package 30 from the retriever 50 to accurately position each virtual crop package icon 100 on the virtual map 95. In one embodiment, the software application 80 can continuously track the crop package 30 on the virtual map 95 as the crop package 30 is moved from the agricultural field 25 to the new location 160. In other embodiments, the software application 80 only displays the virtual crop package icon 100 when the crop package 30 is supported on the agricultural field 25 or when the crop package 30 is dropped at the new location 160. In further embodiments, once the retriever 50 drops the crop package 30, the software application 80 can determine that the crop package 30 has been dropped and automatically update the new location of the crop package 30 on the virtual map 95. The determination that the crop package 30 has been relocated or released can be made based upon a GPS or other location sensor and one or more operation sensors which signal that the crop package 30 has been dropped. The one or more operation sensors can sense or detect one or more operations of the retriever 50 included in releasing or dropping the bale. Each of the location and operation sensors can be located on the retriever 50, the electronic mobile device 65a, or both. These sensors can be the same or different from the sensors used in the collection or retrieval process (i.e., bale pick up). In this embodiment, the second input interface 170 can be omitted.

Steps 155, 165, 175, and 180 can be repeated for each crop package 30 collected and dropped at the new location 160. In other embodiments, the retriever 50 can pick up a plurality of crop packages 30 before dropping at least one of collected crop packages 30 at the new location 160. As such, the retriever operator repeats step 155 for each crop package 30 collected before proceeding to step 165. In addition, the serial numbers 115 of the plurality of crop packages 30 picked up by the retriever 50 are displayed adjacent the second input interface 170 so that the retriever operator can see how many crop packages 30 have been picked up using the software application 80. Furthermore, the retriever operator has the option of selecting the second input interface 170 once to signify that all packages of the plurality of crop packages 30 have been dropped, or selecting one serial number 115 adjacent the second input interface 170 and then selecting the second input interface 170 to signify that only one selected crop package 30 has been dropped.

With reference to FIG. 10, the software application 80 can determine that multiple crop packages 30 are dropped in a similar location and combine multiple virtual crop package icons 100 into one icon and display how many virtual crop package icons 100 were combined. For example, FIG. 10 illustrates that four crop packages 30 are located relatively close to each other (e.g., the crop packages 30 can be positioned in a side-by-side row, the crop packages 30 can be stacked on top of each other, etc.). By an operator selecting this group of icons 100, the software application 80 can expand the group to identify all serial numbers 115 associated with the group of icons 100. In the illustrated embodiment, the software application 80 maintain the order of the crop packages 30 grouped together so that an operator can pick out a desired crop package 30 from the group. In some embodiments, the operator can then select one of the serial numbers 115 for the software application 80 to display the specific characteristics (similar to FIG. 5) of the selected crop package 30. In other embodiments, the software application 80 can determine the order and configuration of the crop packages 30 placed adjacent each other to display how the crop packages 30 are physically stacked/positioned to an operator using the software application 80.

Conventional tracking systems use a GPS sensor on a vehicle that is configured to produce a crop package as well as a GPS sensor on a vehicle that is configured to transport the crop package with both the GPS sensors in communication with a communication network. As such, only particular vehicles that include a GPS sensor can be used in the conventional tracking systems. In addition, the conventional tracking systems include limited real-time information of the position/characteristics of the crop packages and this information is not easily and efficiently conveyed to an operator such that the operator cannot easily visualize the location of the crop package relative to the operator's surrounding terrain.

In the illustrated embodiment, the agricultural crop package formation unit 10 does not need GPS to determine the drop location of the crop package 30 on the agricultural field 25 and/or the retriever 50 does not need GPS to collect and transport the crop package 30 to the new location 160. Rather, in one embodiment, the GPS location of the mobile electronic device(s) 65 used in the agricultural crop package formation unit 10 and/or the retriever 50 is used to track the crop packages 30 (e.g., once the crop packages 30 are dropped onto the agricultural field 25 or the new location 160). As such, the illustrated crop package retrieval and tracking system 55 does not need specialized vehicles-contrary to the conventional tracking systems. Furthermore, as the crop packages 30 are moved from the agricultural field 25 to the new location 160, the serial number 115 of each crop package 30 remains linked with the corresponding crop package 30. As a result, the physical characteristics (e.g., weight, moisture, time harvested, etc.) of each crop package 30 can be tracked and monitored during harvest and/or after harvest. Tracking/monitoring each crop package 30 can be easily accomplished by using one's personal electronic mobile device 65 and opening up the software application 80. For example, the retriever operator can more easily locate and pick up a desired crop package 30 using the software application 80 as the software application 80 allows the retriever operator to select a particular crop package 30 based on a particular physical characteristic (e.g., shown in the information sub-display 118), determine a group of similar crop packages 30 using the filtering feature 120, more efficiently pick up particular crop packages 30 on the agricultural field 25 by tracking his position on the virtual map 95 relative to the particular crop packages 30 (e.g., the retriever operator can see himself get closer to the desired crop package 30 on the virtual map 95), more accurately locate particular crop packages 30 on the agricultural field 25 by correlating the location of the crop package 30 relative to the terrain on/near the agricultural field 25 (e.g., a fence line of the agricultural field 25, a particular tree or vegetation near a side of the agricultural field 25, a valley or mound within the agricultural field 25, etc.), etc.

Also, the manager 85 can track/monitor real-time information of the crop packages 30 being formed, discharged, and moved relative to the agricultural field 25. The manager 85 can also compare this real-time information with a previous year's harvest on the same agricultural field 25, etc. The manager 85 can further monitor the performance of the baler(s) 20 during harvest (e.g., if the baler 20 is accurately producing crop packages 30 at the desired weight, size, tie quality, etc.).

Furthermore, once the crop packages 30 are transported downstream of the new location 160 (e.g., to be sold, to be used to feed livestock, etc.) the crop packages 30 can also be tracked and analyzed using the software application 80. For example, the characteristics of each crop package 30 can be present on the software application 80 during a sale of each crop package 30 to ensure quality, etc., a particular characteristic of a crop package 30 is desired to feed a particular livestock.

Although the disclosure has been described in detail with reference to certain preferred embodiments, variations and modifications exist within the scope and spirit of one or more independent aspects of the disclosure as described. Various features and advantages of the disclosure are set forth in the following claims.

## Claims

1. A crop management system configured to monitor agricultural crop packages (30) produced by a baler (20), the crop management system comprising:
a sensor (40) operable to generate a first signal in response to a crop package (30) being discharged from the baler (20), the first signal representing a first location of the crop package (30) on an agricultural field (25); and
a processor-based subsystem (80) configured to
display a virtual map (95) of the agricultural field (25),
receive the first signal,
determine the first location of the crop package (30) relative to the virtual map (95) based on the first signal,
receive a second signal representing a location of a vehicle collecting the crop package (30) at the first location,
receive a third signal representing a second location of the crop package (30), and
determine the second location of the crop package (30) relative to the virtual map (95) based on the third signal.

2. The crop management system of claim 1, wherein the processor-based subsystem (80) is configured to automatically receive the first signal in response to the crop package (30) being discharged from the baler (20).

3. The crop management system of claim 1 or 2, wherein the processor-based subsystem (80) is configured to display the virtual map (95) on an electronic mobile device (65).

4. The crop management system according to at least one of the preceding claims, wherein the processor-based subsystem (80) is configured to receive the second signal in response to an operator of the electronic mobile device (65) manually selecting a first input interface (150) on the electronic mobile device (65).

5. The crop management system according to at least one of the preceding claims, wherein the processor-based subsystem (80) is configured to receive the third signal in response to the operator of the electronic mobile device (65) manually selecting a second input interface (170) on the electronic mobile device (65).

6. The crop management system according to at least one of the preceding claims, wherein the processor-based subsystem (80) is configured to be in communication with a wireless network (60) to upload at least the first signal and the third signal to the wireless network (60) so that the first signal and the third signal are sharable with at least one other mobile electronic device (65).

7. The crop management system according to at least one of the preceding claims, wherein the sensor (40) is a first sensor, and wherein the crop management system further comprising
a second sensor operable to generate a fourth signal representing at least one physical characteristic of the crop package (30) being formed within the baler (20), and wherein the second sensor is in communication with the processor-based subsystem (80), and wherein the processor-based subsystem (80) is configured to associate the at least one physical characteristic of the crop package (30) with the first location of the crop package (30).

8. The crop management system according to at least one of the preceding claims, wherein the processor-based subsystem (80) is configured to associate the at least one physical characteristic of the crop package (30) to the second location of the crop package (30).

9. The crop management system according to at least one of the preceding claims, wherein the baler (20) is configured to discharge a plurality of crop packages (30) on the agricultural field (25), and wherein the processor-based subsystem (80) is configured to display the first location of each of the plurality of crop packages (30) on the virtual map (95), and wherein the processor-based subsystem (80) is configured to associate the at least one physical characteristic of each of the plurality of crop packages (30) to the first location of each of the plurality of crop packages (30).

10. The crop management system according to at least one of the preceding claims, wherein the processor-based subsystem is configured to determine a group of the plurality of crop packages (30) within a determined range based on the at least one physical characteristic of the plurality of crop packages (30).

11. The crop management system according to at least one of the preceding claims, wherein the processor-based subsystem (80) is configured to display the group of the plurality of crop packages (30) on the virtual map (95).

12. A crop management system configured to monitor agricultural crop packages (30) produced by a baler (20), the crop management system comprising:
a sensor (40) operable to generate a first signal in response to a crop package (30) being discharged from the baler (20), the first signal representing a first location of the crop package (30) on an agricultural field (25); and
a processor-based subsystem (80) configured to
receive the first signal in response to the crop package (30) being discharged from the baler (20), the first signal communicated to the processor-based subsystem (80) by a mobile electronic device (65),
determine the first location of the crop package (30) based on the first signal,
receive a second signal representing a second location of the crop package (30), the second signal communicated to the processor-based subsystem (80) by the mobile electronic device (65), and
determine the second location of the crop package (30) based on the second signal.

13. The crop management system of claim 12, wherein the processor-based subsystem (80) is configured to display a virtual map (95) on the electronic mobile device (65).

14. The crop management system of claim 12 or 13, wherein the sensor (40) is a first sensor, and wherein the baler (20) is configured to discharge a plurality of crop packages (30) on the agricultural field (25), the crop management system further comprising
a second sensor operable to generate a third signal representing at least one physical characteristic of each of the plurality of crop packages (30) formed within the baler (20), and wherein the processor-based subsystem is configured to determine a group of the plurality of crop packages (30) within a determined range based on the at least one physical characteristic of the plurality of crop packages (30).

15. A method of managing agricultural crop packages (30), the method comprising:
forming a crop package (30) within an agricultural baler (20);
discharging the crop package (30) from the agricultural baler (20) onto an agricultural field (25) at a first location, the agricultural baler (20) including a sensor (40) configured to produce a first signal representing the first location, the sensor (40) in communication with a processor-based subsystem (80) configured to identify the first location of the crop package (30) on a virtual map (95) of the agricultural field (25) based on the first signal;
inputting a second signal into the processor-based subsystem (80), the second signal representing a vehicle collecting the crop package (30) at the first location;
transporting the crop package (30) to a second location different from the first location; and
inputting a third signal into the processor-based subsystem, the third signal representing the second location of the crop package (30), the processor-based subsystem (80) configured to identify the second location of the crop package (30) on the virtual map of the agricultural field based on the third signal.
